# EUROPEAN PATENT APPLICATION

(11) **EP 4 592 033 A1**
(43) Date of publication of application: **30.07.2025**
(21) Application number: 24223183.5
(22) Date of filing: 24.12.2024
(51) Int. Cl.: B25F 5/00

(54) **POWER TOOL STATUS INDICATOR**

(30) Priority: 23.01.2024 EP 24153526
(71) Applicant: Techtronic Cordless GP, Anderson, SC 29621 (US)
(72) Inventor: LUO, Hai Ming, Dongguan City (CN); JIANG, Xin, Dongguan City (CN); YANG, Sheng Dong, Dongguan City (CN)
(74) Representative: Zimmermann & Partner Patentanwälte mbB

(57) **Abstract**

The disclosure teaches a power tool and safety device for a power tool. The power tool comprises a working component, a motor, a power source; at least one sound emitting device and at least one sensor for detecting one or more operational parameters of the tool. A controller controls at least one sound emitting device to emit: a first sound in a first mode of operation if the one or more operational parameters detected by the at least one sensor satisfies a first predetermined threshold for that parameter; and a second sound in a second mode of operation if the one or more operational parameters detected by the at least one sensor satisfies a second and different predetermined threshold for that parameter, wherein said second sound is distinct from said first sound.

## Description

### FIELD OF THE DISCLOSURE

The present disclosure relates to power tools, and in particular power tool(s) which receive a detachable power source.

### BACKGROUND OF THE DISCLOSURE

Power tools may contain an internal power source (such as an integrated rechargeable battery) or a detachable power source (such as a removable battery pack or removable power cable connected to an external DC or AC supply).

Current or voltage consumption demands of the power tool (e.g. during peak consumption) may exceed the capacity of the power source utilised especially when using detachable power sources; resulting in over temperature or over current events.

For example, a user may select a low capacity battery pack with a small footprint and/or an external power supply that is significantly below the necessary parameters to support peak operation of the attached tool. Such events may shorten the operative lifespan of the power tool or battery; or may potentially even compromise the safety of the operator, especially if the tool continues to be operated for a long time in this state.

Typically, power tools are operated in a variety of challenging operational environments including bright, dark, noisy, dusty and dirty environments where it can be difficult to determine the operational status of the power tool and/or battery.

It is an object of the present disclosure to address or at least partially ameliorate some of the above problems of the current approaches.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with one aspect of the present disclosure, a power tool is provided that may include a working component, a motor for driving the working component, a power source and at least one sensor coupled to a controller for detecting one or more parameters of the power source of the tool or the motor of the power tool. The controller may be configured to generate an output signal, with the output signal including a sound output.

In accordance with one aspect of the present disclosure, a device, in particular a safety device, for an electrical power tool is provided. The device may include a controller for detecting one or more parameters of a power source of the tool or a motor of the power tool via at least one sensor coupled thereto. The controller may be configured to generate an output signal, wherein the output signal includes a sound output.

In accordance with one aspect of the present disclosure, a non-transient computer readable medium is provided. The non-transient computer readable medium may contain instructions for controlling an electrical power tool to emit a sound output, wherein the instructions may be configured so that at least one processor of the power tool may be configured for detecting one or more parameters of a power source of the tool or a motor of the power tool via at least one sensor coupled thereto; and generating an output signal with the output signal including a sound output.

In accordance with one aspect of the present disclosure, there is provided a power tool, the power tool may comprise a working component, a motor for driving the working component, a power source; at least one sound emitting device and at least one sensor coupled to a controller for detecting one or more operational parameters of the tool and controlling at least one sound emitting device to emit: a first sound in a first mode of operation if the one or more operational parameters detected by the at least one sensor satisfies a first predetermined threshold for that parameter; and a second sound in a second mode of operation if the one or more operational parameters detected by the at least one sensor satisfies a second and different predetermined threshold for that parameter, said second sound may be distinct from said first sound.

In various embodiments of the present invention, the operational parameters of the tool detected by the at least one sensor may be selected from the group comprising the voltage of the power source; the current drawn by the motor; the current supplied by the power source; the temperature of the motor, the temperature of the battery, the temperature of controller, and the operation speed of the motor.

Advantageously, when the one or more operational parameters satisfies the second predetermined threshold, the second sound may be emitted for a predetermined duration and then if the one or more operational parameters still satisfies the second predetermined threshold, the controller may switch the tool to an inoperative state.

Also, if the one or more operational parameters satisfies the first predetermined threshold but does not satisfy the second predetermined threshold, the first sound may be emitted by the sound emitting device for a first predetermined time.

Preferably, one or more of the timbre, frequency, loudness or type of the first sound emitted by the sound emitting device may be different from the corresponding timbre, frequency, pitch, volume or type of the second sound emitted by the sound emitting device.

In accordance with another aspect of the present disclosure, there is provided a safety device for an electrical power tool, the safety device may comprise: a controller for detecting one or more operational parameters of a power source of the tool or a motor of the power tool via at least one sensor coupled thereto; the controller may be configured to activate the at least one sound emitting device to emit: a first sound in a first mode of operation if the one or more operational parameters detected by the at least one sensor satisfies a first predetermined threshold for that parameter; and a second sound in a second mode of operation if the one or more operational parameters detected by the at least one sensor satisfies a second predetermined threshold for that parameter, said second sound may be distinct from said first sound.

The operational parameters of the tool detected by the at least one sensor may be selected from the group comprising the voltage of the power source; the current drawn by the motor; the current supplied by the power source; the temperature of the motor, the temperature of the battery, the temperature of the controller, and the operation speed of the motor.

Advantageously, once the one or more operational parameters satisfies the second predetermined threshold, the second sound may be emitted for a predetermined duration and then if the one or more operational parameters still satisfies the second predetermined threshold at the end of this predetermined duration, the controller may switch the tool to an inoperative state.

Furthermore, if the one or more operational parameters satisfies the first predetermined threshold but does not satisfy the second predetermined threshold, the first sound may be emitted by the sound emitting device for a first predetermined duration.

Preferably, one or more of the timbre, frequency, loudness or type of the first sound emitted by the sound emitting device may be different from the corresponding timbre, frequency, pitch, volume or type of the second sound emitted by the sound emitting device.

In accordance with a third aspect of the present disclosure, there is provided a non-transient computer readable medium, which contains instructions for controlling an electrical power tool to emit a first sound and at least a second sound, the instructions may be configured so that at least one processor of the power tool may be configured for: detecting one or more operational parameters of a power source of the tool or a motor of the power tool via at least one sensor coupled thereto; activating at least one sound emitting device of the tool to emit: said first sound in a first mode of operation if the one or more operational parameters detected by the at least one sensor satisfies a first predetermined threshold for that parameter; and said second sound in a second mode of operation if the one or more operational parameters detected by the at least one sensor satisfies a second predetermined threshold for that parameter, wherein said second sound may be distinct from said first sound.

The operational parameters of the tool detected by the at least one sensor may be selected from the group comprising the voltage of the power source; the current drawn by the motor; the current supplied by the power source; the temperature of the motor, the temperature of the battery, the temperature of the controller, and the operation speed of the motor.

Advantageously, once the one or more operational parameters satisfies the second predetermined threshold, the second sound may be emitted for a predetermined duration and then if the one or more operational parameters still satisfies the second predetermined threshold at the end of this predetermined duration, the tool may be switched to an inoperative state.

Yet, if the one or more operational parameters satisfies the first predetermined threshold but does not satisfy the second predetermined threshold, the first sound may be emitted by the sound emitting device for a first predetermined duration.

Preferably, one or more of the timbre, frequency, loudness or type of the first sound emitted by the sound emitting device may be different from the corresponding timbre, frequency, pitch, volume or type of the second sound emitted by the sound emitting device.

As understood herein, the term "or" may be understood as exclusive "or". In other embodiments, the term "or" may be understood as meaning "and/or".

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
Fig 1A depicts an exemplary schematic view of a power tool according to an embodiment of the present disclosure.
Fig 1B depicts an exemplary drill including the safety device of the present disclosure which is operated as described herein.
Fig 1C depicts an exemplary chainsaw including the safety device of the present disclosure which is operated as described herein.
Fig 2 depicts exemplary images depicting various detachable power sources.
Fig 3A depicts a table with information about detachable power sources in an embodiment.
Fig 3B depicts a table with information about a detachable power source according to an embodiment.
Fig 4A is an exemplary representation of detected first and second thresholds for certain parameter values in an embodiment satisfying a first and second conditions.
Fig 4B is an alternate representation of detected first and second thresholds for certain parameter values in an embodiment satisfying a first and second conditions.
Fig 5A is an exemplary flow chart depicting steps in the operation of the safety device/power tool according to an embodiment.
Fig 5B is an exemplary mode of operation for a sound emitting device.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the spirit and scope of the disclosure.

The disclosed technology addresses the need in the art for an effective way of providing a notification to the operator of a power tool that one or more monitored parameters have satisfied one or more threshold conditions which indicate a change in operation may be required.

It would be appreciated that as used herein "satisfying" a threshold may mean falling below a threshold (e.g. with respect to detected voltage emitted from a power source such as a battery,), or exceeding a threshold (e.g. with respect to detected temperature of a motor or battery, or measured current consumed by a motor). The specific value of the predetermined threshold values for a detected parameter and whether the satisfying of that threshold means that that the parameter falls above or below the relevant threshold for that detected parameter is determinable by persons skilled in the art based on the parameter and detection means utilised.

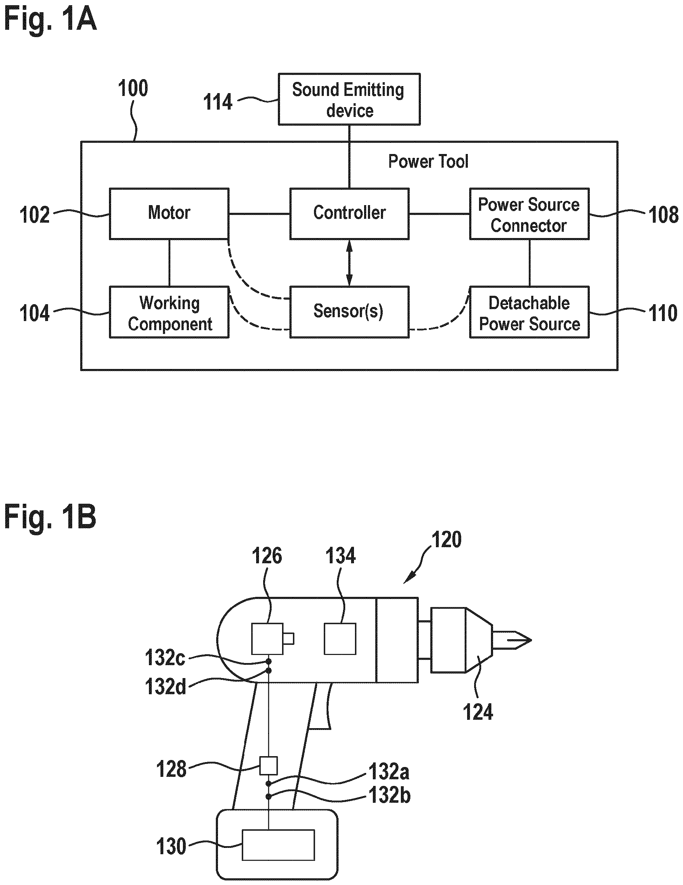

Fig 1A depicts a schematic diagram showing a power tool **100** according to an embodiment. The power tool **100** comprises a working component **104,** a motor **102,** a power source connector **108** and a controller **106.** The power tool **100** may be any power tool **100** including, but not limited to, handheld, carried, or pushed/driven tools. Examples include a line trimmer, chainsaw, power drill, lawnmower, pillar drill, leaf blower, snow-blower, etc.

The working component **104** may be configured to perform a working task when driven by the motor **102.** For example, the working component **104** may include a spool and line for a line trimmer, a chain for a chainsaw, a chuck and bit for a power drill, etc.

The motor **102** is configured to drive the working component **104.** The motor **102** may be a DC or AC, brushed or brushless motor. The motor **102** may be configured to operate at any suitable input voltage, for example, 9V, 12V, 18V, 20V or 40V DC, 110V or 240V AC, or any other suitable voltage rating.

The power source connector **108** is configured to receive a detachable power source. The detachable power source may be a standalone power storage e.g. a cell, battery, power pack, voltaic pile, capacitor or supercapacitor. A battery of any suitable chemistry may be used, for example, lithium ion, nickel cadmium, alkaline, mercury, silver oxide, lead-acid, etc. Alternatively, the detachable power source may be an external power supply, for example, a mains AC supply at 110V or 240V, an external DC power supply e.g. from an external power pack or a mains connected DC transformer power supply, or from a generation source (e.g. solar panel).

The detachable power source may include an internal data store to retain information of the detachable power source. For example, the internal data store may include information related to parameters, characteristics or usage of the detachable power source, as will be described in more detail below.

The sensor **112** may be any one or more of a number of different types of sensors for measuring operational parameters of the power tool. For example, the sensor may be a current sensor connected to the motor or power source, a voltage sensor connected to the power source, a temperature sensor positioned to monitor the temperature of the battery, the motor or a transistor such as a MOSFET connected with the controller, or a speed sensor connected so as to detect the speed of the motor in operation.

The sound emitting device **114** may be a buzzer or speaker or similar, or some other sound emitting device, or even the motor itself. This sound emitting device may be controlled so as to emit two or more audibly distinct sounds which can be differentiated by hearing by an operator from each another. Alternatively, a person skilled in the art would appreciate that separate sound emitting devices could be controlled by the controller to emit the sounds without departing from the scope of the present disclosure.

The first and second sounds may differ in one or more of the timbre, frequency, loudness or type of the first sound emitted by the sound emitting device such that this differentiation is possible.

The controller **106** as depicted is configured to control both the operation of the motor and/or the sound emitting device. Alternatively, separate controllers may control motor operation and the operation of the sound emitting device.

The controller **106** as depicted is coupled to the at least one sensor and controls the sound emitting device such that if the one or more operational parameters detected by the at least one sensor satisfies a first predetermined threshold for that parameter; and
a second sound in a second mode of operation if the one or more operational parameters detected by the at least one sensor satisfies a second predetermined threshold for that parameter, wherein said second sound is distinct from said first sound.

Fig 1B is a schematic diagram showing a power tool **120** according to an embodiment. The power tool **120** is a handheld power drill comprising a chuck **124** as a working component, a motor **126,** a detachable power source **130** received at a power source connector (not shown) and a controller **128.** The controller **128** may be connected to a current sensor across the battery **132a,** a temperature sensor for the battery **132b,** a temperature sensor for the motor **132c,** a current sensor for the motor **132d** and other sensors.

In an exemplary scenario, the drill may be used for drilling a large hole into concrete, with a small capacity battery attached. In this scenario, the user may be somewhat impatient; and squeeze the trigger in an attempt to perform the job more quickly. This type of operation will cause the battery to rapidly discharge, and the current consumed by the motor may exceed the ability of the battery to supply the current required. In this way; the current consumed by the motor exceeds a first threshold current that battery can supply, this threshold parameter being stored by the controller (potentially based on the battery being identified by the controller).

Because the current usage satisfies (in this case exceeds) the first threshold, the sound emitting device **134** may be triggered to emit a first sound, a buzz for 5 sec (for example) at a pitch of 15 Hz and a decibel level of 60dB to indicate to the user that the mode of operation (battery usage) is unsustainable. This current consumption may be reduced (e.g. by the user reducing the force on the drill or reducing the trigger pressure). However, after a predetermined period during which the sound is emitted; the controller may be configured to switch the tool to an inoperative state. Advantageously the predetermined period may be same as, or more than the period for which the first sound is emitted. It would be appreciated that the above parameters are exemplary only and other duration and sound levels may be utilised.

The same operator using the drill on another hole in a concrete block may operate the motor with such hammering force/speed that the current consumed by the motor satisfies a second threshold for that battery source/drill combination. This second threshold may be less than the first threshold and indicate a state where the current usage is detrimental for ongoing battery life. Upon detection by the sensor that the current satisfies (exceeds) said second threshold, the controller may trigger the same or another sound emitting device **134** to emit a second sound, which sounds different to the first sound.

This difference may be in the timbre, frequency, pitch, volume or type of the second sound emitted by the sound emitting device, such that it is distinguishable acoustically by the operator, even in a noisy environment.

It has been found that changes in length, cycle, timbre (such as frequency, pitch) or intervals of the sound are particularly effective in notifying the operator that an operating parameter of the power tool has exceeded normal working conditions; and that some sort of modification to the operation of the tool is required.

This type of modification may be releasing the trigger to reduce the speed, reducing the force on urging the drill bit into the hole, or withdrawing the bit from the hole more frequently or similar. Alternatively, the operator may change the small capacity power source for a power source with a larger capacity, or a mains power supply; both of which would likely increase the relative thresholds discussed.

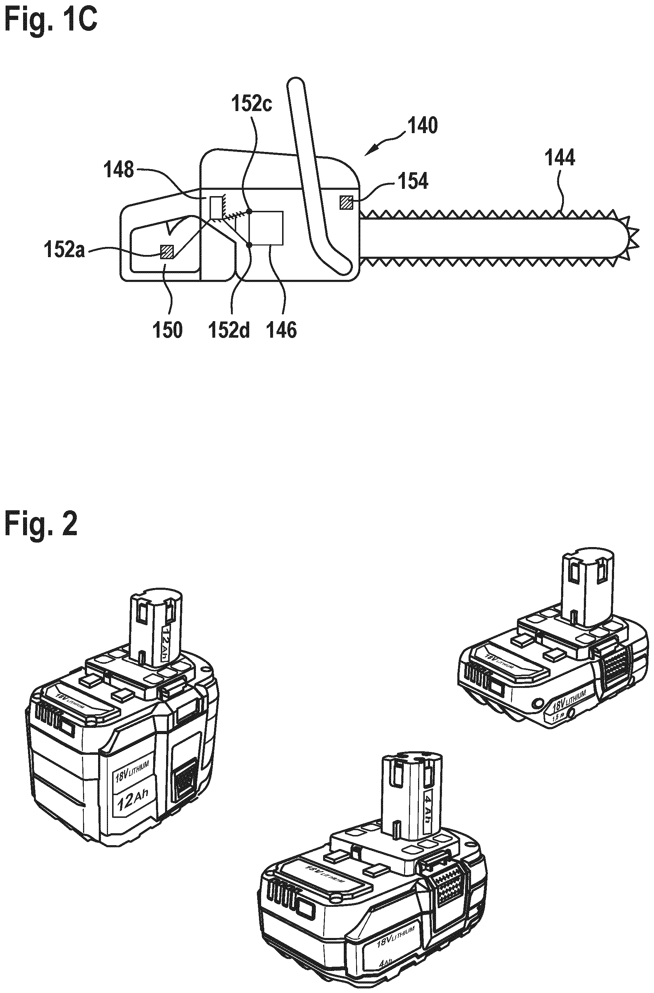

Fig 1C is a schematic diagram showing a power tool **140** according to a further embodiment. In this case, the power tool **140** is a handheld chainsaw comprising a blade and chain **144** as a working component, a motor **146,** a detachable power source **150** received at a power source connector (not shown) and a controller **148.**

The controller **148** may be connected to a current sensor **152a** across the power source **150,** a temperature sensor **152b** for the power source **150,** a temperature sensor **152c** for the motor **146,** a current sensor **152d** for the motor **146** and other sensors.

In an exemplary arrangement the chainsaw **140** may be used for sawing an extremely hard wood vertical tree; and due to poor cut design by the operator; the tree may be forced close on the chainsaw blade. As the operator continues to operate the motor **146** to make the cut; there is higher resistance to rotation of the chain; which means the motor temperature increases. The temperature of the motor may increase under these conditions until it exceeds a first threshold temperature, this parameter being stored by the controller **148.**

Because the temperature in this case satisfies the first threshold (ie it exceeds this threshold), the sound emitting device **154** may be triggered to emit a first sound, which may comprise for example a buzz for 3 sec at a pitch of 15 Hz and a decibel level of 60dB to indicate to the user that their ongoing usage should not be continued due to the overload condition caused by their usage mode.

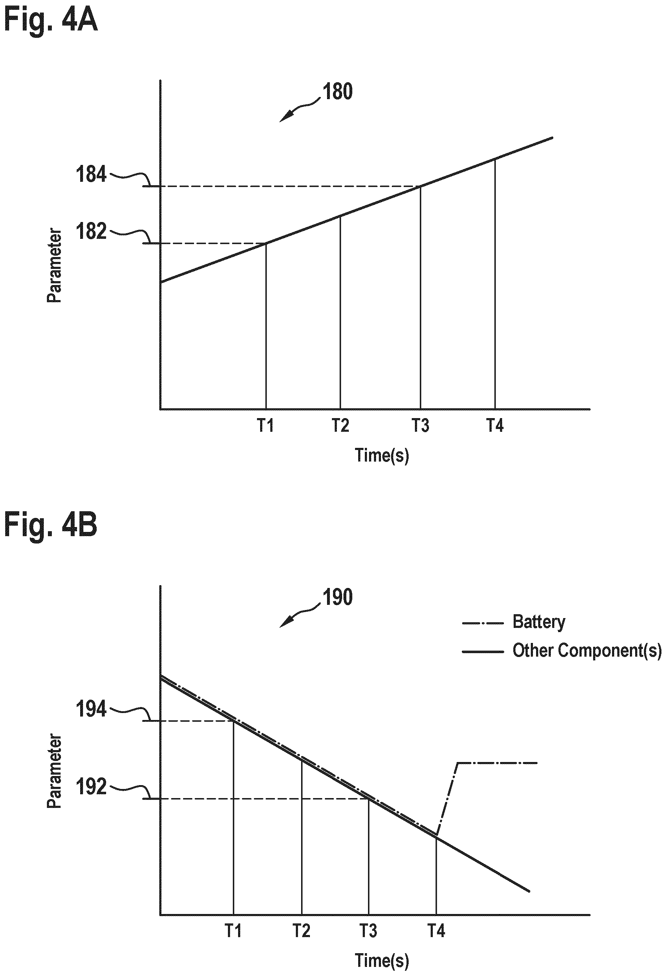

This is depicted schematically in Fig 4A; where a graph **180** shows that the temperature satisfies (exceeds) the first threshold **182** at time interval t1; continues to increase from time interval t2; and the first sound is emitted from t2 to t3. (Alternatively, the first sound could be configured to be emitted from t1 to t3 without departing from the present disclosure).

If the user continues to operate the chainsaw in this manner, the temperature may satisfy a second temperature threshold **(184** on Fig 4A) and after a predetermined period has expired (e.g. 5 seconds) and the user has not modified the manner of operation of the saw to reduce the temperature; the controller may be configured to switch the tool to an inoperative state.

This is also depicted schematically in Fig 4A, where a graph **180** depicts how the temperature satisfies (exceeds) a second threshold **184** at time interval t3, after which a second sound is emitted. If this mode of usage is continued past time interval t4; the tool is shut down. Current drops to zero at time interval t4 due to the power-off status of the tool, temperature raises for a short of period from time interval t4 and drops gradually to normal temperature. XXZ_ Change FIG 4.

This difference may be in the timbre, frequency, pitch, volume or type of the second sound emitted by the sound emitting device, such that it is distinguishable acoustically by the operator, even in a noisy environment.

It has been found that changes in length, cycle, timbre (such as frequency, pitch) or intervals of the sound are particularly effective in notifying the operator that one or more operating parameter(s) of the power tool have passed threshold for normal working conditions; and that some sort of modification to the mode operation of the tool is required. This type of modification may be releasing the trigger to reduce the speed, reducing the force by changing the cut design, or withdrawing the saw from the cut more frequently or similar.

Similarly, if (for example 18V) Lithium ion batteries were used in the chainsaw, if the chainsaw was constantly used the voltage level supplied by the battery might satisfy (i.e. drop below) a certain threshold (e.g 17.2V). Once this threshold is satisfied, the second sound may be triggered for a certain duration. If the chainsaw is further used beyond this second threshold and falls below a second threshold voltage, this usage may be transitioning to a point whereby the battery will cease operating. Hence after the second threshold is satisfied; the second sound is produced; and optionally the controller switches the tool to an inoperative state after a predetermined time period (which may or may not be the same as the period for which the sound is normally made) has passed.

An example of this arrangement is depicted in Fig 4B where the first sound is triggered in scenario 1 as the parameter - e.g. voltage satisfies (drops below) the first threshold **194** at time interval t1. The first sound may be emitted from t1 or t2 until t3 or similar as appropriate.

If the voltage satisfies (drops below) the second voltage threshold **192** as depicted at t3; a second sound is triggered. If this voltage remains below the second threshold 192 for the time period until t4, the tool may be switched to an inoperative state.

In an exemplary case, the first sound is emitted when the voltage drops to the first voltage threshold **194,** for example 18V at t1. The second sound is triggered when the voltage continues dropping until meeting the second voltage threshold 192, for example 12.5V, at t3. If the voltage being measured is the battery voltage; it would be appreciated that this may remain relatively constant thereafter as shown in Fig 4B.

Alternatively; as depicted by the measured voltage of another component may drop toward zero after t4. However, it is understandable the voltage of the battery pack as detected will remain a constant status after t4. For example, the voltage of the battery pack will be higher than the second voltage threshold **192** (e.g. 12.5V), and preferably, lower than the first voltage threshold **194** (e.g. 18V).

In addition to the examples shown in Figs 1B and 1C, the power tool may be embodied as, for example, a hedge trimmer, string trimmer, lawnmower, blower, washer, vacuum cleaner or any other suitable tool or appliance. Similar thresholds may be determined for various parameters in these devices and corresponding behaviours once said thresholds are satisfied may also be implemented.

Fig 2 is an image showing different types of detachable power source. As shown, the detachable power source may be a detachable battery pack. The detachable power source may be an 18V battery pack. A capacity of the battery pack and, in some cases, a physical size of a battery pack casing, may depend on the number of cells in the battery pack. As shown, battery packs of various sizes and capacities may be provided with a common connector. In this way, a power tool **100** can be provided with a detachable power source having one of a number of possible sizes and capacities. The battery pack may therefore be selected by the user based on any of a number of factors e.g. intended use, size/weight, cost, availability etc. As an example, the three 18V battery packs shown have capacities of 2Ah, 4Ah, and 12Ah, from the smallest to the largest battery pack. In other examples, the battery pack may have a lower capacity e.g. 1.5Ah, an intermediate capacity in the range e.g. 5Ah or 9Ah, or a higher capacity e.g. 20Ah or higher.

The power source connector **108** may include one or more electrical contacts arranged to abut with corresponding contacts on the received detachable power source. The power source connector **108** may be configured to provide power from the detachable power source to one or more components of the power tool **100** e.g. the motor **102.**

The power source connector **108** may include one or more data contacts arranged to abut with corresponding contacts on the received detachable power source. In this way, the power source connector **108** may receive information stored on an internal data store of the detachable power source.

The controller **106** may receive the inputs from the sensors **112** and may also be configured to control the motor **102.**

Optionally, the power controller **106** may be configured to retrieve information about the detachable power source connected to the power source connector **108.** The controller **106** may retrieve information stored on an internal data store of the detachable power source via one or more data contacts of the power source connector **108.**

Alternatively, the controller **106** may use other means to determine information about the detachable power source. Such means may be associated with the power source connector **108** or may be separately provided. The controller 106 may use optical means, for example, an image sensor to read a barcode, QR code, text or characters or any other indicia printed or otherwise provided on the detachable power source. The controller **106** may use tactile means, e.g. one or more contact switches arranged to sense a pattern or protrusions or other tactile indicator formed on the casing of the detachable power source. The controller **106** may use electromagnetic means, e.g. an RFID tag or short/range communication connection with an internal data store (such as NFC or Bluetooth). Alternatively, the controller **106** may use electric sensor **112** for directly measuring one or more parameters of the detachable power source, e.g. measuring a voltage load, capacity, etc.

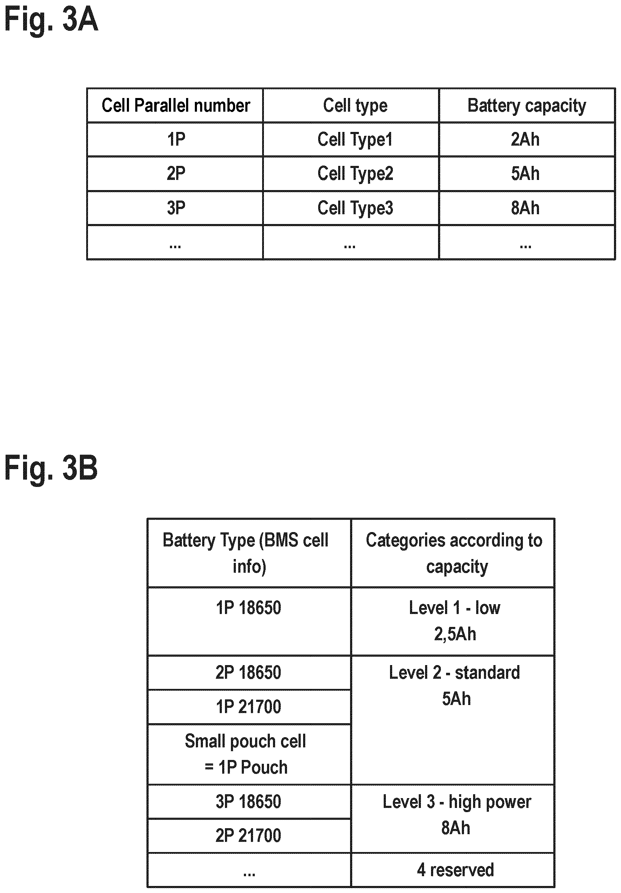

Fig 3A is a table showing information about a detachable power source according to an embodiment. The table shown may be an example of information stored on an internal data store of the detachable power source. The information stored on the internal data may be retrieved via one or more data contacts of the power source connector **108.**

The retrieved information of the detachable power source may include a number of cells of the detachable power source. As shown, the battery capacity may be provided directly. In some examples, only the number of cells and/or the cell type may be provided, allowing the power controller **106** to determine the battery capacity indirectly.

The retrieved information of the detachable power source may include a type, model or serial number of the detachable power source.

The power tool **100** may include a memory configured to store a lookup table.

Fig 3B is a table showing information about a detachable power source according to an embodiment. The table shown may be an example of a lookup table stored in a memory of the power tool **100.** The table may include a specific number of battery types or models. The table may be limited by the types/models of batteries which are physically compatible with the power source connector **108.** The information in the lookup table maybe utilised to determine the first and second threshold values and hence when the first and second sounds are emitted by the sound emitting device.

Figs 4A and 4B depict exemplary representation of detected first and second thresholds for certain parameter values in an embodiment satisfying (exceeding and falling below respectively thresholds) first and second thresholds as described herein.

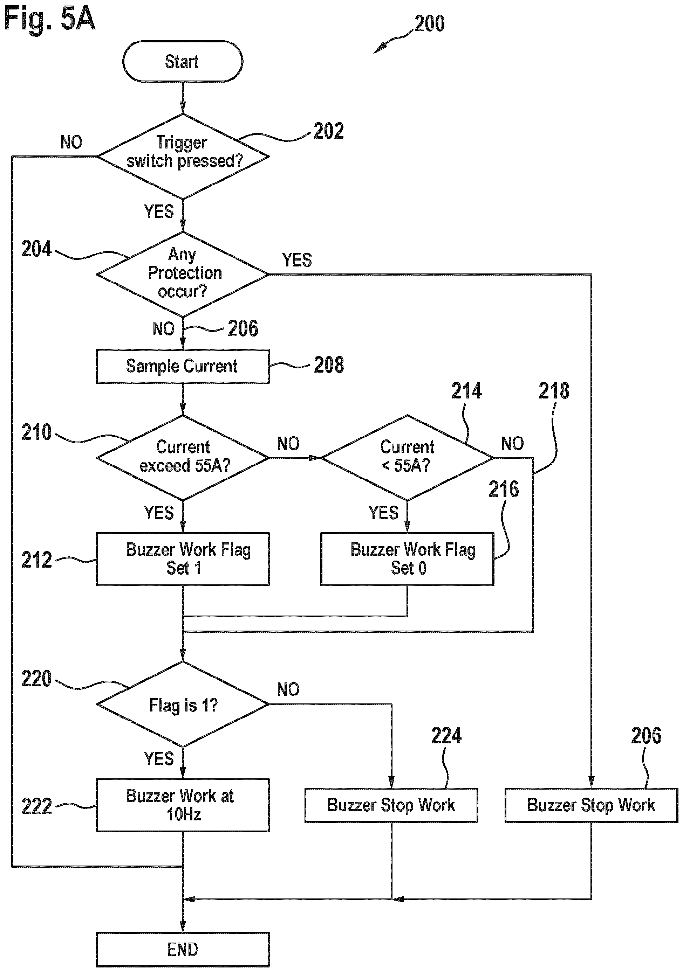

Fig 5A depicts an overload function warning operation chart **200** for an indication of exemplary logic underlying the safety device and system of the present disclosure. Advantageously the instructions of the processors of the controller of the power tool may be configured to perform the steps outlined below.

As depicted, if the trigger switch is pressed at **200,** and if the tool is in a protection state **204** as depicted, sound emitting device depicted as a buzzer (but not limited to such) may be configured to work at a first frequency (2 Hertz) until the protection state is resolved.

This may be a situation where there is some sort of fault, such as over-temperature, over current, over voltage etc.

Alternatively, if the tool is not in a protection state **206,** the sample current may be detected by sensor is indicated at **208.**

If the current exceeds (satisfies) a threshold value of in this case **55A;** depicted by **210,** a sound emitting device work flag may be set to a value of one, as depicted **212.**

Conversely, if the current is detected to be less than the threshold value of **50A;** as indicated by **214,** the work flag for the sound emitting device may be set to a value of zero; as indicated by **216.** Finally, if the current is greater than **50A** (and of course less than **55A),** the work flag for the sound emitting device may not be set as depicted by branch **218.**

If flag for the sound emitting device is set at 1, as depicted at **220,** then the sound emitting device may be configured to operate at a frequency of 10 Hz, as depicted by branch **222.** However, if the flag is not one, the sound emitting device may be configured to cease working as depicted by branch **224.**

It would be appreciated that the sound emitting device used in the safety device or power tool of the present disclosure may be customised to provide alternative sounds for different thresholds; indicative of the tool entering different modes of operation e.g. protection state due to overload, insufficient battery power, different battery capacity; low voltage, low power etc.

It would be appreciated that other states may be chosen in addition to or alternatively to the states described above. The sound emitting device may be a simple buzzer; able to be operate at different frequencies to produce at least first and second sounds. Alternatively, the sound emitting device may be a more sophisticated speaker and memory without departing from the scope of the present disclosure; configured to emit at least first and second sounds which are distinguishable acoustically from each other.

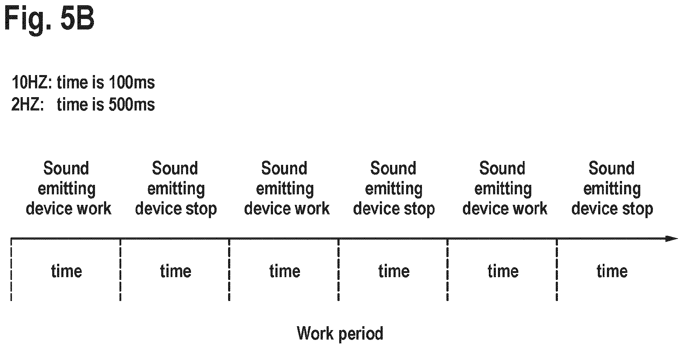

Fig 5B depicts an exemplary schematic diagram depicting how the same sound emitting device may be operated; with different stop period lengths used for the exemplary frequencies emitted of 10Hz and 2HZ. As depicted the 10HZ frequency uses a stop period of 100ms; and the 2HZ frequency sound uses a stop period of 500 ms; but it would be appreciated that neither the frequency nor the stop periods are limited to such; and alternative periods/frequencies could also be utilised.

It can be appreciated sounds with lower frequency than 2HZ (such as 0.5HZ or 1HZ) and higher than 10HZ (such as 15 HZ) are also suitable for the above example. However, distinguishing frequencies between the two different sounds shall be implemented. For example, for sounds with shorter interval (i.e. rapid sound), frequency follows the range between 8HZ and 15HZ. In comparison, sounds with longer interval (i.e. slower sound) have a frequency that is at least 4 times lower than that of the rapid sound. By this way, two sounds can be clearly distinguished by the operator by means of different sound intervals and/or the sufficiently differentiated frequencies as set out above for example.

In this way the power tool and safety device of the present disclosure can operate the same sound emitting device such as a speaker, buzzer or similar in different ways to produce different sounds to notify the operator of the existence of a predetermined state.

This state may be a state or mode of operation which may shut the tool down and prevent the operator from continuing to operate the power tool in the manner they are currently operating the tool; or may be a state or mode of operation where the operator is warned acoustically that the mode or manner of operation of the tool may not be appropriate. The use of sound is this way provides a better notification to the operator compared with indication light means as such may not be visible in outdoor/daylight operations.

Advantageously, the tool may be configured such that even if the tool is shut down and remains in an inactive operational state, the user can still feel the vibration of the tool generated by the emitted sound. The user sensing such vibration may also serve as a further indication to enhance the performance of the emitted sound indication.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processor to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Devices implementing methods according to these disclosures can comprise hardware, firmware and/or software, and can take any of a variety of form factors. Functionality described herein also can be embodied in controllers or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Some specific aspects of the present invention are furthermore summarized in the following numbered embodiments:
1. A power tool comprising a working component, a motor for driving the working component, a power source, at least one sound emitting device and at least one sensor coupled to a controller for detecting one or more operational parameters of the tool and controlling at least one sound emitting device to emit:
   a first sound in a first mode of operation if the one or more operational parameters detected by the at least one sensor satisfies a first predetermined threshold for that parameter; and
   a second sound in a second mode of operation if the one or more operational parameters detected by the at least one sensor satisfies a second and different predetermined threshold for that parameter, wherein said second sound is distinct from said first sound.
2. The power tool according to embodiment 1, wherein the operational parameters of the tool detected by the at least one sensor are selected from the group comprising the voltage of the power source; the current drawn by the motor; the current supplied by the power source; the temperature of the motor, the temperature of the battery, the temperature of controller, and the operation speed of the motor.
3. The power tool according to embodiment 1 or embodiment 2, wherein once the one or more operational parameters satisfies the second predetermined threshold, the second sound is emitted for a predetermined duration and then if the one or more operational parameters still satisfies the second predetermined threshold, the controller switches the tool to an inoperative state.
4. The power tool according to embodiment 1 or embodiment 2, wherein if the one or more operational parameters satisfies the first predetermined threshold but does not satisfy the second predetermined threshold, the first sound is emitted by the sound emitting device for a first predetermined time.
5. The power tool according to embodiment 1 or embodiment 2, wherein one or more of the timbre, frequency, loudness or type of the first sound emitted by the sound emitting device is different from the corresponding timbre, frequency, pitch, volume or type of the second sound emitted by the sound emitting device.
6. A safety device for an electrical power tool comprising:
   a controller for detecting one or more operational parameters of a power source of the tool or a motor of the power tool via at least one sensor coupled thereto;
   wherein the controller is configured to activate the at least one sound emitting device to emit:
      a first sound in a first mode of operation if the one or more operational parameters detected by the at least one sensor satisfies a first predetermined threshold for that parameter; and
      a second sound in a second mode of operation if the one or more operational parameters detected by the at least one sensor satisfies a second predetermined threshold for that parameter, wherein said second sound is distinct from said first sound.
7. The safety device for the electrical power tool according to embodiment 6, wherein the operational parameters of the tool detected by the at least one sensor are selected from the group comprising the voltage of the power source; the current drawn by the motor; the current supplied by the power source; the temperature of the motor, the temperature of the battery, the temperature of the controller, and the operation speed of the motor.
8. The safety device for the electrical power tool according to embodiment 6 or embodiment 7, wherein once the one or more operational parameters satisfies the second predetermined threshold, the second sound is emitted for a predetermined duration and then if the one or more operational parameters still satisfies the second predetermined threshold at the end of this predetermined duration, the controller switches the tool to an inoperative state.
9. The safety device for the electrical power tool according to embodiment 6 or embodiment 7, wherein if the one or more operational parameters satisfies the first predetermined threshold but does not satisfy the second predetermined threshold, the first sound is emitted by the sound emitting device for a first predetermined duration.
10. The safety device for the electrical power tool according to embodiment 6 or embodiment 7, wherein one or more of the timbre, frequency, loudness or type of the first sound emitted by the sound emitting device is different from the corresponding timbre, frequency, pitch, volume or type of the second sound emitted by the sound emitting device.
11. A non-transient computer readable medium, containing instructions for controlling an electrical power tool to emit a first sound and at least a second sound, wherein the instructions are configured so that at least one processor of the power tool is configured for:
   detecting one or more operational parameters of a power source of the tool or a motor of the power tool via at least one sensor coupled thereto;
   activating at least one sound emitting device of the tool to emit:
      said first sound in a first mode of operation if the one or more operational parameters detected by the at least one sensor satisfies a first predetermined threshold for that parameter; and
      said second sound in a second mode of operation if the one or more operational parameters detected by the at least one sensor satisfies a second predetermined threshold for that parameter, wherein said second sound is distinct from said first sound.
12. The non-transient computer readable medium according to embodiment 11, wherein the operational parameters of the tool detected by the at least one sensor are selected from the group comprising the voltage of the power source; the current drawn by the motor; the current supplied by the power source; the temperature of the motor, the temperature of the battery, the temperature of the controller, and the operation speed of the motor.
13. The non-transient computer readable medium according to embodiment 11 or embodiment 12, wherein once the one or more operational parameters satisfies the second predetermined threshold, the second sound is emitted for a predetermined duration and then if the one or more operational parameters still satisfies the second predetermined threshold at the end of this predetermined duration, the tool is switched to an inoperative state.
14. The non-transient computer readable medium according to embodiment 11 or embodiment 12, wherein if the one or more operational parameters satisfies the first predetermined threshold but does not satisfy the second predetermined threshold, the first sound is emitted by the sound emitting device for a first predetermined duration.
15. The non-transient computer readable medium according to embodiment 11 or embodiment 12, wherein one or more of the timbre, frequency, loudness or type of the first sound emitted by the sound emitting device is different from the corresponding timbre, frequency, pitch, volume or type of the second sound emitted by the sound emitting device.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A power tool comprising a working component, a motor for driving the working component, a power source, and at least one sensor coupled to a controller for detecting one or more parameters of the power source of the tool or the motor of the power tool, the controller being configured to generate an output signal,
wherein the output signal includes a sound output.

2. A device for an electrical power tool, the device comprising:
a controller for detecting one or more parameters of a power source of the tool or a motor of the power tool via at least one sensor coupled thereto;
wherein the controller is configured to generate an output signal,
wherein the output signal includes a sound output.

3. The device of claim 2, wherein the device is a safety device.

4. A non-transient computer readable medium, containing instructions for controlling an electrical power tool to emit a sound output, wherein the instructions are configured so that at least one processor of the power tool is configured for:
detecting one or more parameters of a power source of the power tool or a motor of the power tool via at least one sensor coupled thereto;
generating an output signal,
wherein the output signal includes a sound output.

5. The power tool of claim 1, or the device of claim 2 or 3, or the non-transient computer readable medium of claim 4, wherein the one or more parameters are operational parameters of the power source or the power tool.

6. The power tool of claim 1 or 5, or the device of claim 2, 3 or 5, or the non-transient computer readable medium of claim 4 or 5, wherein the power tool comprises at least one sound emitting device, and wherein the controller is configured to generate an output signal by controlling the at least one sound emitting device to emit the sound output.

7. The power tool of any of claims 1, 5 or 6, or the device of any of claims 2, 3, 5 or 6, or the non-transient computer readable medium of any of claims 4, 5 or 6, wherein the sound output comprises:
a first sound in a first mode of operation if the one or more operational parameters detected by the at least one sensor satisfies a first predetermined threshold for that parameter; and
a second sound in a second mode of operation if the one or more operational parameters detected by the at least one sensor satisfies a second, preferably different, predetermined threshold for that parameter, wherein said second sound is distinct from said first sound.

8. The power tool of any of claims 1 and 5 to 7, or the device of any of claims 2, 3 and 5 to 7, or the non-transient computer readable medium of any of claims 4 to 7, wherein the controller is configured to activate an output signal by activating at least one sound emitting device to emit the sound output.

9. The power tool according to any of claims 1 and 5 to 8, or the device of any of claims 2, 3 and 5 to 8, or the non-transient computer readable medium of any of claims 4 to 8, wherein the operational parameters of the tool detected by the at least one sensor are selected from the group comprising the voltage of the power source; the current drawn by the motor; the current supplied by the power source; the temperature of the motor, the temperature of the battery, the temperature of controller, and the operation speed of the motor.

10. The power tool, the device or the non-transient computer readable medium according to any of claims 7 to 9, wherein, once the one or more operational parameters satisfies the second predetermined threshold, the second sound is emitted for a predetermined duration and then, if the one or more operational parameters still satisfies the second predetermined threshold, the controller switches the tool to an inoperative state.

11. The power tool, the device or the non-transient computer readable medium according to any of claims 7 to 10, wherein, if the one or more operational parameters satisfies the first predetermined threshold but does not satisfy the second predetermined threshold, the first sound is emitted by the sound emitting device for a first predetermined time.

12. The power tool, the device or the non-transient computer readable medium according to any of claims 7 to 11, wherein one or more of a timbre, frequency, loudness or type of the first sound emitted by the sound emitting device is different from the corresponding timbre, frequency, pitch, volume or type of the second sound emitted by the sound emitting device.
